# EUROPEAN PATENT SPECIFICATION

(11) **EP 1 858 225 B1**
(45) Date of publication and mention of the grant of the patent: **07.11.2012**
(21) Application number: 07251950.7
(22) Date of filing: 11.05.2007
(51) Int. Cl.: H04L 29/06, G06Q 10/00, G06F 21/00

(54) **Apparatus, system and computer program product for document editting through network**
Vorrichtung, System und Computerprogrammprodukt zur Bearbeitung von Dokumenten über ein Netzwerk
Appareil, système et produit de programme informatique pour l'édition de documents via un réseau

(30) Priority: 12.05.2006 JP 2006133768
(43) Date of publication of application: 21.11.2007
(73) Proprietor: Ricoh Company, Ltd., Tokyo 143-8555 (JP)
(72) Inventor: Kikyo, Cho, c/o Ricoh Co. Ltd., Tokyo 143-8555 (JP)
(74) Representative: Lamb, Martin John Carstairs

(56) References cited:
- JP-A- 2005 101 855
- US-A1- 2006 149 567
- US-B1- 6 314 425
- US-B1- 6 845 383
- BIENNIER F ET AL: "Collaborative business and data privacy: Toward a cyber-control?" May 2005 (2005-05), COMPUTERS IN INDUSTRY, ELSEVIER SCIENCE PUBLISHERS. AMSTERDAM, NL, PAGE(S) 361-370 , XP004884590 ISSN: 0166-3615 * the whole document *

## Description

Example embodiments generally relate to an client terminal equipment, document edit system, and a computer program product for editing a document acquired with an image forming apparatus through a network, which are capable of improving working efficiency in a work group on the network effectively.

Background information management systems are known from JP2005-101855, US2006/149569, US 6,845,383, US 6,314,425 and a document entitled "Collaborative business and data privacy: Toward a cyber-control?" by Biennier et al. In background information management system in the printing industry, a demand of downsizing in respect of hardware and printing on demand in respect of photoware has been increased. Further, in recent years, a network of an information management system has progressed. Multi-function printers (MFP) or a plurality of personal computers (PC) are connected with Ethernet (registered trademark), etc., so that they form a small-scale work group on interconnection. Therefore, needs for a solution in business in which two or more information processing equipments perform edit/print of a document in parallel are increasing.

Here, the work group is constituted with the MFP, which has a scanner function, an input operator, an edit software, an editor, the MFP with printer function, and an output operator, etc. The work group mentioned above usually consists of two or more sets of the client terminal equipments, which function as an edit terminal, and two or more sets of MFP.

In such a work group, the input operator converts a paper manuscript deposited by a customer into electric data using the scanner of MFP. The edit operator edits the electronized document into a specification which the customer is demanding. A printing operator prints the document using the print function of MFP. This is a usual work flow. Input operation is usually performed by the MFP side, and the edit operation is usually performed by the PC with which edit software is installed.

Recently, an image forming apparatus or system which has function in which an edit operator (or an edit terminal) can be specified by operation using an operation panel at the same time of inputting a paper manuscript is also used.

For example, there is a documentation management system equipped with host equipment which registers addition information of specifying printout data in the electric data sent from a copying machine and searches electric data using the addition information.

In another example, an image forming apparatus memorizes an initial printing-conditions data in image data with combined, and transmits and receives the image data for form image using the initial printing-conditions data.

Further, in another example, there is an image data acquisition method of acquiring image-processing functional information and an image sheet from an image data creation equipment, choosing image-processing functional information and image data information from the acquired list, and transmitting selected data to the image data creation equipment.

In the above mentioned work group, although printing operation can be performed from both sides of MFP and client terminal equipment, the MFP and the client terminal equipment mostly separates away. Therefore, different operators usually operate input operation and edit operation separately.
It is an aim of the present invention to address these problems and to improve upon known technology.

An embodiment of the present invention is directed to a client terminal equipment, a document edit system, or a computer program product effectively improve efficiency of edit processing in a work group on a network. In example embodiments, a client terminal equipment may include a display unit to display a graphical user interface which is commanded by an editor, an edit control section to command an image processing apparatus connected to the network to download the document using a terminal discernment value, a terminal discernment section to manage a list of the terminal discernment value of the client terminal equipment which constitutes a work group in the network, and an information processing section to control access to the document using the list of the terminal discernment value between the edit control section and the terminal discernment section. A document edit system may include a display unit connected with the network to display a graphical user interface which is commanded by an editor, an edit control section to command an image processing apparatus connected to the network to access the document using a terminal discernment value, a plurality of client terminal equipments including a terminal discernment section to manage a list of the terminal discernment value of the client terminal equipment which constitutes a work group in the network and an information processing section to control access to the document using the list of the terminal discernment value between the edit control section and the terminal discernment section, and an image processing apparatus to respond to a document demand from the client terminal equipment, to search the document by using the terminal discernment value included in the document demand as a search key, and to download the searched document to the client terminal equipment. A computer program product of the client terminal equipment to perform edit processing of a document through a network, the edit processing may include a step of displaying a graphical user interface which is commanded by an editor, a step of commanding an image processing apparatus connected to the network to access the document using a terminal discernment value, a step of managing a list of the terminal discernment value of the client terminal equipment which constitutes a work group in the network, a step of controlling access to the document using the list of the terminal discernment value between the edit control section and the terminal discernment section, a step of downloading the file with the image processing apparatus under conditions that the access is controlled, and a step of storing the downloaded document with the storage processing section.

Additional features and advantages of the present invention will be more fully apparent from the following detailed description of example embodiments, the accompanying drawings and the associated claims.

A more complete appreciation of the disclosure and many of the attendant advantages thereof will be readily obtained as the same becomes better understood by reference to the following detailed description when considered in connection with the accompanying drawings, wherein:
FIG. 1 is an outline drawing illustrating a document edit system according to an example embodiment of the present invention;
FIG. 2 is a block diagram illustrating an outline of configuration of the MFP 12 of the document edit system of FIG. 1;
FIG. 3 is a look-up table illustrating a relation between a document and an editor stored in memory area of the MFP 12 of the document edit system of FIG. 1;
FIG. 4 is a block diagram illustrating an outline of configuration of the client terminal equipment 14 of the document edit system of FIG. 1;
FIG. 5 is a table illustrating an address list stored in a memory space of the client terminal equipment of the document edit system of FIG. 1;
FIG. 6 is a flowchart illustrating a processing of the client terminal equipment of the document edit system of FIG. 1;
FIG. 7 is a display example illustrating GUI showing documents which can be processed with the client terminal equipment of the document edit system of FIG. 1;
FIG. 8 is a display example illustrating GUI showing documents which can be processed with the client terminal equipment of the document edit system of FIG. 1;
FIG. 9 is a display example illustrating GUI showing documents after editing and storing into a storage in order to order an end post-processing, which can be processed with the client terminal equipment of the document edit system of FIG. 1;
FIG. 10 is a block diagram illustrating an outline of second example of configuration of the client terminal equipment 14 of the document edit system of FIG. 1;
FIG. 11 is a flowchart illustrating a processing of the client terminal equipment as a second example of FIG. 10 in the document edit system of FIG. 1;
FIG. 12 is a display example illustrating GUI shown by an order of the edit control section according to an order, which specifies the next editor, from the client terminal equipment of the document edit system of FIG. 1;
FIG. 13 is a table illustrating an application list stored in a memory space of the client terminal equipment of the document edit system of FIG. 1;
FIG. 14 is a display example illustrating GUI 100 shown by using an application list 116 of the document edit system of FIG. 1;
FIG. 15 is a flowchart illustrating a processing of a terminal discernment/management section of the client terminal equipment of the document edit system of FIG. 1;
FIG. 16A is a block diagram illustrating a packet form sent out from an MFP communications processing section and a network control section of the client terminal equipment of the document edit system of FIG. 1;
FIG. 16B is also a block diagram illustrating a packet form sent out from an MFP communications processing section and a network control section of the client terminal equipment of the document edit system of FIG. 1; and
FIG. 16C is also a block diagram illustrating a packet form sent out from an MFP communications processing section and a network control section of the client terminal equipment of the document edit system of FIG. 1.

It will be understood that if an element or layer is referred to as being "on," "against," "connected to" or "coupled to" another element or layer, then it can be directly on, against connected or coupled to the other element or layer, or intervening elements or layers may be present. In contrast, if an element is referred to as being "directly on", "directly connected to" or "directly coupled to" another element or layer, then there are no intervening elements or layers present. Like numbers refer to like elements throughout. As used herein, the term "and/or" includes any and all combinations of one or more of the associated listed items.

Spatially relative terms, such as "beneath", "below", "lower", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, term such as "below" can encompass both an orientation of above and below. The device may be otherwise oriented (rotated 90 degrees or at other orientations) and the spatially relative descriptors used herein interpreted accordingly.

Although the terms first, second, etc. may be used herein to describe various elements, components, regions, layers and/or sections, it should be understood that these elements, components, regions, layers and/or sections should not be limited by these terms. These terms are used only to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

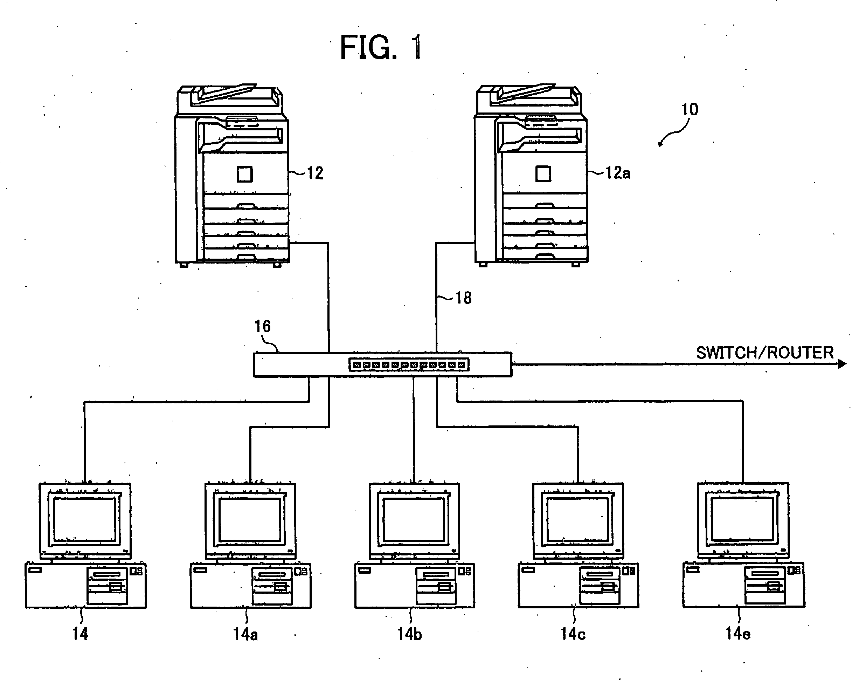

In describing example embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner. Referring now to the drawings, wherein like reference numerals designate identical or corresponding parts throughout the several views, particularly to FIG. 1, an example of a document edit system according to example embodiments is explained.

FIG. 1 is an outline drawing illustrating a document edit system according to an example embodiment of the present invention. A document edit system 10 includes a plurality of MFPs 12, and 12a, a plurality of client terminal equipments 14, 14a, 14b, 14c, and 14e such as PCs, which are interconnected through a network 18, such as Ethernet (registered trademark) or an optical network. In convenience of explanation of this example, the MFP 12 acquires a document and transmits files with the client terminal equipment 14.

The MFP 12 acquires a document which is an object data of the client terminal equipment 14. The MFP 12 stores a suitable document discernment value, for example, a document name, a reference number, etc. with which an operator attached. The MFP 12 answers the demand from the client terminal equipment 14, and downloads the stored document into the client terminal equipment 14. In addition, the MFP 12 or the MFP 12a receives an edited document with processing instructions according to the demand from the client terminal equipment 14. A print function, a facsimile function, an e-mail function, etc. in the MFPs are started, and the data communications to external equipment are performed through print processing and the network 18.

The MFP 12 requires an input of the terminal discernment value from an input operator, which specifies the client terminal equipment 14 which should carry out processes, when the input operator acquires a document. The input operator stores the acquired document, a document discernment value, and a terminal discernment value, which are in related. The document discernment value, which can be registered or edited, may be single or plural in related to one document.

The client terminal equipment 14 is connected to MFP 12 through the network 18 and a network equipment 16 such as a switching hub, a bridge or a hub, etc. NETBEUI and SMB/CIFS are used for client terminal equipment 14 on a transport layer level. Since a work group is formed, file sharing etc. is possible.

The client terminal equipment 14 requires download of the document from the MFP 12. Edit processing is performed using suitable application software to the document with the client terminal equipment 14. The client terminal equipment 14 transmits the edited document to the MFP 12 and 12a or a suitable printer. The client terminal equipment 14 requires processing of print processing or facsimile transmission, e-mail transmission, etc. The MFP 12 and the client terminal equipment 14 are connected using an FTP protocol specified to RFC959, a TFTP protocol specified to RFC783, or a telnet protocol specified to RFC854.

The MFP 12 and each client terminal equipment 14 are connected to other network equipment, such as a switch or a router, through the network equipment 16. The MFP 12 and each client terminal equipment 14 are connected with other networks, such as a local area network (LAN), a wide area network (WAN), and the Internet (INET), under a TCP/IP protocol. Data transmission and reception between the MFP 12 and each client terminal equipment 14 and external equipments can be performed.

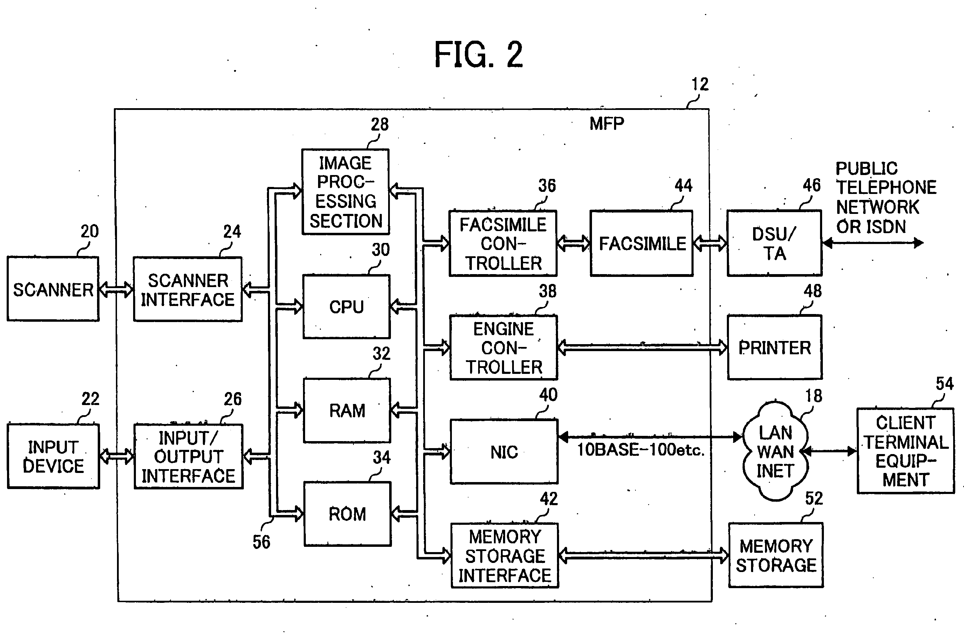

FIG. 2 is a block diagram illustrating an outline of configuration of the MFP 12 of the document edit system of FIG. 1. The MFP 12 acquires data or image data from a scanner 20 equipped with ADF, and from an input device 22 such as a panel and an input key. The image data acquired with the scanner 20 etc. by an input operator's instructions is sent to an image processing section 28 through a scanner I/F 24. Then, a document which is a processing object is made. The MFP 12 includes a CPU 30 which functions as a system controller. The CPU 30 manages execution of each application processing in the MFP 12 using a method call etc.

The MFP 12 also includes a RAM 32 for processing an image etc. or giving execution space of application software, and a ROM 34 which stores data or a program for processing etc.

As a CPU which the MFP 12 uses, for example, PENTIUM (registered trademark) - PENTIUM IV, the compatibility CPU with PENTIUM, POWER PC (registered trademark), MIPS, etc. can be mentioned,.

As an operating system (OS) to be used, MacOS (trademark), Windows (registered trademark), and Windows 200X Server, UNIX (registered trademark), LINUX (registered trademark), or the other suitable OS can be mentioned. Furthermore, the MFP 12 stores and performs an application program described by object-oriented programming languages, such as C, C++, Visual C++, VisualBasic, Java (registered trademark), etc. which operate on the OS mentioned above.

The MFP 12 is performing bidirectional protocol conversion between Windows (registered trademark) machines using protocols such as SAMBA, when using OS such as UNIX (registered trademark) and LINUX (registered trademark). Moreover, the MFP 12 stores a library for operating the MFP 12 as an FTP server, a TFTP server, or a telnet server etc., and an execution of transmission and reception of a predetermined file is enabled. A compatibility of a file and a command is realized in the MFP 12 by protocol conversion such as SAMBA when using OS such as UNIX (registered trademark) and LINUX (registered trademark).

The MFP 12 includes a facsimile controller 36 or a network interface card (NIC) 40, a memory storage interface 42 which has standards such as ATA, Serial ATA, ATAPI, ATA-4, etc. The MFP 12 stores the document input through the scanner 20 as predetermined formats such as GIF, BITMAP, JPEG, JPEG2000 and PNG, or an original format, into a memory storage 52 such as a hard disk, EEPROM, or a flash memory.

When the MFP 12 stores a document with a document discernment value, a terminal discernment value which specifies the edit terminal or editor that the input operator registered using a panel, an input key, etc. of the input device 22 is also stored.

A facsimile controller 36 transforms the acquired image data to the facsimile format of G3, G4, etc. Facsimile communication is performed through an analog or a digital circuit via a public telephone network or ISDN through a facsimile 44 or a digital service unit/terminal adapter (DSU/TA) 46 such as a modem, under communications protocols such as T.4, T.6, or T.90.

A NIC 40 is connected to networks 18 such as the Internet, LAN, or a wide area network (WAN) through the Ethernet (registered trademark) cables such as 10 BASE-100, etc. By using the NIC 40, the MFP 12 is operated as an FTP server, a telnet server, and a remote printer to a user. The MFP 12 has a function of suitable mailer, and transmitting and receiving are possible with dial-up connection under protocols of P P P (Point-to-Point Protocol) such as SMTP or POP.

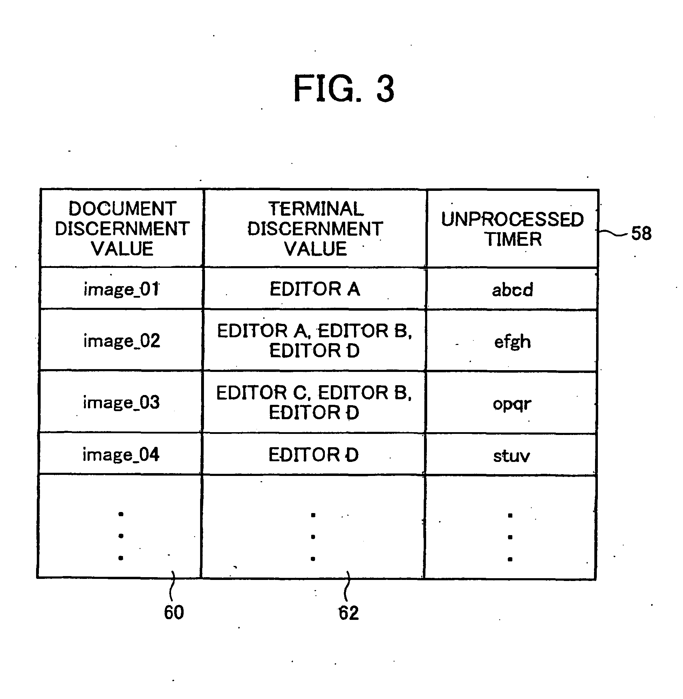

FIG. 3 is a look-up table 58 illustrating a relation between a document and an editor stored in memory area of the MFP 12 of the document edit system of FIG. 1. In this invention, relations between the document discernment value, the document file, and the terminal discernment value are not limited the relations of the embodiment in FIG. 3. For example, the document discernment value and the terminal discernment value can be described in a header domain of the document file, and the document file can be registered into an address domain after the header domain, so that a form of a single file is possible. Search of the terminal discernment value can also be performed by the same method as search of the document file using a different search key. However, it is desirable to store values using the look-up table shown in FIG. 3 in the MFP 12, which enables narrow search space, and search efficiency is raised. The MFP 12 can store an original document in a specific storage area with operation to the MFP 12 by the input operator. In this case, the document for edit is stored in the "edit document" holder or directory of the MFP 12 as a copy, and also can be stored corresponding with the editor and the document discernment value which has been specified.

In the look-up table 58 shown in FIG. 3, a field 60 which registers a document discernment value and a field 62 which registers a terminal discernment value are registered into the same record. A field which registers a unprocessed timer corresponding to time from storing the document in the MFP 12 to first referring for edit process is also prepared. In addition, any variable values which can raise edit efficiency can be registered in the field.

In this invention, the document discernment value means a document name and a document reference number written by codes such as ASCII and JIS given to the document file so that editors can easily identify the document. The terminal discernment value is a discernment value for specifying the editor for whom the input operator requests edit on a work group, for example, besides the IP address or the MAC address, the names "Suzuki", "Shimizu", "Editor A", etc. can be possible to use.

If the MFP 12 logs on a network, it can periodically send an ARP broadcasting packet according to the address resolution protocol (ARP) specified to RFC826 to the network 18 at the logon time or after the logon time. A MAC address and an IP address are acquired from the response packet. The terminal discernment value of the client terminal equipment and an IP address are entered in the look-up table of FIG. 3.

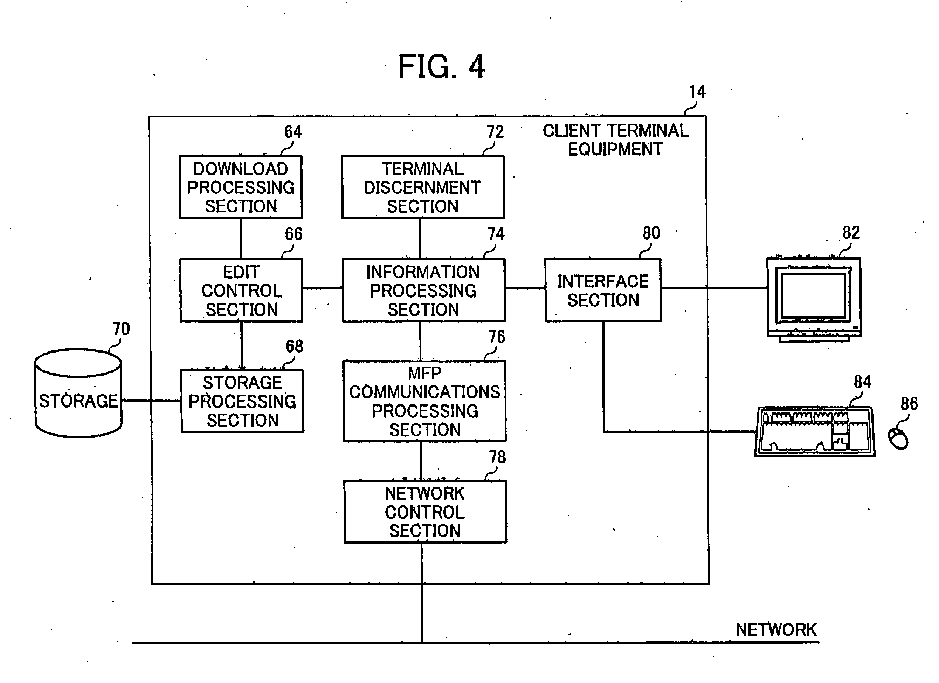

FIG. 4 is a block diagram illustrating an outline of configuration of the client terminal equipment 14 of the document edit system of FIG. 1. The client terminal equipment 14 shown in FIG. 4 is constituted by installing a program product of this invention to a personal computer or a workstation. The client terminal equipments 14a - 14e have the same construction. The client terminal equipment 14 includes PENTIUM (registered trademark) or the compatibility CPU with PENTIUM (registered trademark), and system memories such as ROM and RAM. As long as OS's such as Windows (registered trademark) can be performed in this invention, it can be used without limitation in using CPU and memories. The client terminal equipment 14 forms the work group which consists of the MFP 12 and the client terminal equipments 14 - 14e using the SMB/CIFS protocol containing NETBEUI. Therefore, it is possible to process the document which the MFP 12 has acquired using file sharing etc.

When the client terminal equipment 14 logs on the network, it acquires terminal discernment values, such as a terminal name which is a name of other client terminal equipments which is on the network then, a network address of the MFP, etc. The terminal discernment values are registered in an address list and is used for future transactions.

The client terminal equipment 14 shown in FIG. 4 includes an information processing section 74, and the information processing section 74 controls execution of each functional block of the client terminal equipment 14 mentioned later. The client terminal equipment 14 further includes a download processing section 64, a storage processing section 68, a terminal discernment section 72, an MFP communications processing section 76, and a network control section 78. The client terminal equipment 14 performs data transmission and reception with the MFP 12 under access control using the terminal discernment value, and a document is provided in the client terminal equipment 14. The client equipment 14 manages input and output data according to an editor through input/output devices, such as a display unit 82, a keyboard 84, and a mouse 86, through an interface section 80.

The client terminal equipment 14 further includes an edit control section 66. The edit control section 66 receives an input event for which the editor has used the keyboard 84 and the mouse 86 through the graphical user interface (GUI) displayed on the display unit 82. The edit control section 66 responds according to the input event, and commands to the information processing part 74. Each functional section is operated and the transaction between the MFP 12 is performed. The edit control section 66 further manages edit processing of the document.

Each functional section of the client terminal equipment 14 is explained in detail. The download processing section 64 responds to instructions of the client terminal equipment 14, and downloads the document stored in the MFP 12. The download processing section 64 forms as FTP client terminal equipment and TFTP client terminal equipment in this invention. The download processing section 64 responds to protocol used for data communications, and performs an input of a password or User ID, and generates a transaction which a security level differs. When the document downloaded from the MFP 12 is judged to be a success of downloading by the information processing section 74, the document is stored in the storage 70 such as a hard disk based on instructions of the download processing sect 64 for future edits. The document is read according to instructions of the edit control section 66, and is provided for the edit processing with the client terminal equipment 14.

The terminal discernment section 72 responds to instructions from the edit control section 66, and receives information of terminal discernment from the information processing section 74. The terminal discernment section 72 acquires the terminal discernment value corresponding to an editor name sent to the MFP 12. Processing of sending the searched terminal discernment value to the MFP communications processing section 76 is performed.

The MFP communications processing section 76 receives the terminal discernment value and a command which requires processing of the MFP 12, and creates a transmission packet. The created transmission packet is sent to the network control section 78. The network control section 78 searches the network address of the MFP 12 and sends the transmission packet to the searched network address. The MFP communications processing section 76 and the network control section 78 receive the transmission packet addressed to the client terminal equipment 14 through the network 18. The transmission packet is sent to the download processing section 64, and processing of notifying a download success etc. is enabled.

The storage processing section 68 includes an interface of suitable standards such as ATA, Serial ATA, ATAPI, ATA-4, IDE, etc. The storage processing section 68 commands the storage equipment such as a hard disk drive unit to store network data including the terminal discernment value required in order to perform a transaction through the network 18 besides the document file downloaded from the MFP 12 etc. The storage processing section 68 responds to a demand of the client terminal equipment 14, and performs read-out processing, and enables edit processing of the client terminal equipment 14.

The interface section 80 controls the display unit 82 through graphic interfaces such as VGA, etc. The interface section 80 transmits an input event from the keyboard 84, the mouse 86, etc. to the information processing section 74 using a suitable connection interface and an application programming interface (API), and performs processing corresponding to the input event from GUI.

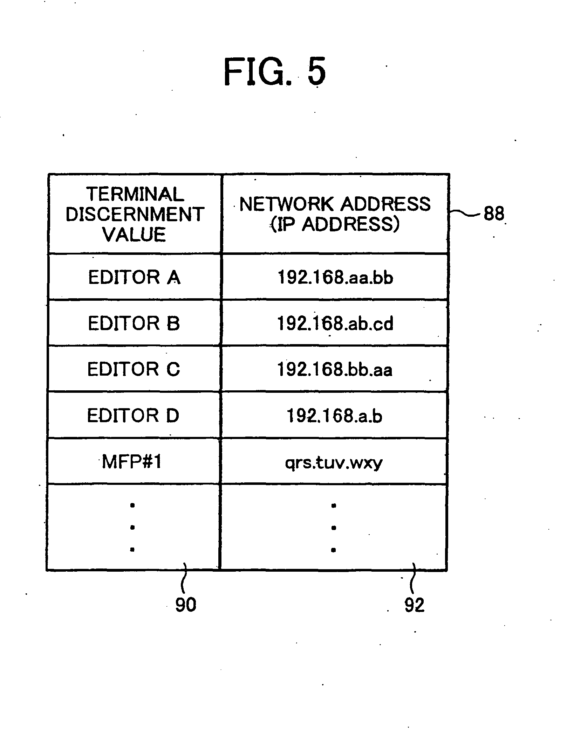

FIG. 5 is a table illustrating an address list 88 stored in a memory space of the client terminal equipment 14 of the document edit system of FIG. 1. When the client terminal equipment 14 logs on the network 18, the client terminal equipment 14 acquires the address list 88. The address list 88 is read to a memory etc. and used by the network control section 78 until the client terminal equipment 14 is shut down. The address list 88 includes a field 90 which stores a terminal discernment value, and a field 92 which stores a network address. Terminal discernment value such as the editor name peculiar to the client terminal equipment 14, for example, "Suzuki", "Shimizu", "Editor A", etc. and a corresponding IP address are entered in each record.

In this invention, not an IP address but a MAC address can also be used as a network address. In addition, both an IP address and a MAC address can be entered in a record. "MFP#1" which is a peculiar terminal name specifying the MFP 12 on a work group is given to the MFP 12. Furthermore, as for the MFP 12, the IP address of the MFP 12 is entered, and the IP address is added to a transmission packet in the case of download of a file, or upload.

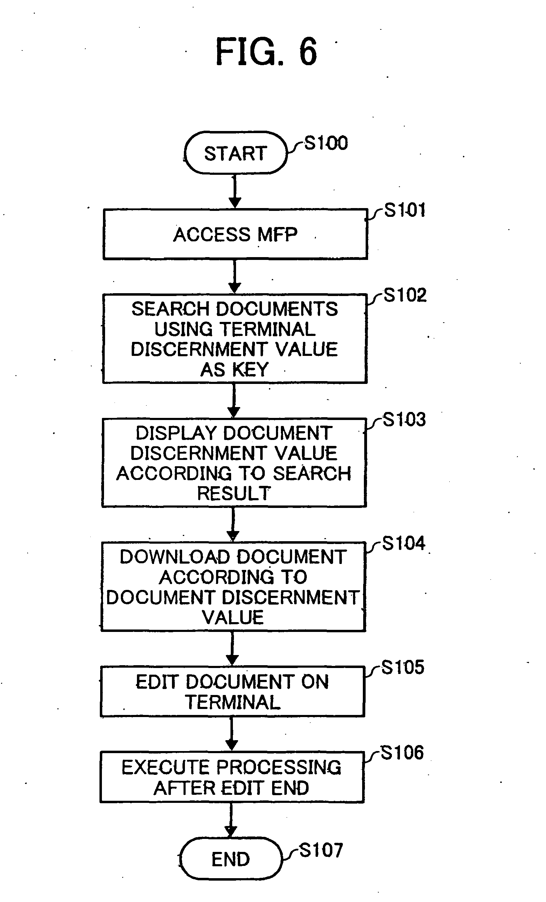

FIG. 6 is a flowchart illustrating a processing of the client terminal equipment of the document edit system of FIG. 1. The processing starts from Step S100 and the client terminal equipment accesses the MFP 12 at Step S101. GUI displayed on the display unit of the client terminal equipment 14, and a file sharing protocol can be used for the access. In this stage, the MFP 12 can be accessed using protocols such as TFTP, FTP, or telnet.

At Step S102, the client terminal equipment 14 receives a document read demand through GUI. The client terminal equipment 14 which has received the document read demand starts the edit control section 66, and makes the information processing section 74 to acquire a terminal discernment value as a search key. The acquired search key is transmitted to the MFP 12. The MFP 12 searches the list of documents to which the client terminal equipment 14 has download authority. At Step S103, the document discernment values such as a search document name stored as a file temporarily are displayed on the client terminal equipment 14 corresponding to the search results.

A document name can also be displayed on the display unit 82 of the client terminal equipment 14. A thumbnail creation plug-in API which the client terminal equipment 14 contains can be used, and the file corresponding to the document name can also be displayed as a thumbnail.

At Step S104, the client terminal equipment 14 downloads a document corresponding to the document discernment value displayed on GUI, or the corresponding thumbnail. The client terminal equipment 14 responds to generation of a download demand event of double-clicking a document name or a thumbnail, and download of the document is started when the edit control section 66 starts the download processing section 64. The processing section 64 generates the download demand of the file corresponding to the document name based on a TFTP protocol or an FTP protocol. The download processing section 64 sends out the download demand packet generated through the MFP communications processing section 76 and the network control section 78 to the network address of the MFP 12.

The MFP 12 receives the download demand packet and determines the document file applicable to the document discernment value included in the download demand packet. The document file is encapsulated to a response packet. Processing which returns the response packet to the client terminal equipment 14 which has sent out the download demand packet is performed, and file transmission processing is started. The MFP 12 waits for the information of the completion of download from the client terminal equipment 14. The MFP 12 receives the information of the completion of the download from the client terminal equipment 14, and makes a series of transactions complete. In addition, in this invention, when the MFP 12 has Web server ability, download based on an HTTP protocol can be performed.

At Step S105, the client terminal equipment 14 reads the downloaded document from the storage 70, and responds to an input event from an editor through GUI. The edit control section 66 operates-each functional processing section, and performs edit processing. Moreover, the document is stored in the storage 70 according to progress of edit processing. After the edit processing is completed, at Step S106, the edit control section 66 receives an edit end event through GUI, and commands instructions of a processing after an edit end, for example, a storing instruction to the storage 70, a print processing, a facsimile transmitting processing, an e-mail transmission processing to the MFP 12, etc. The processing is ended at Step S107.

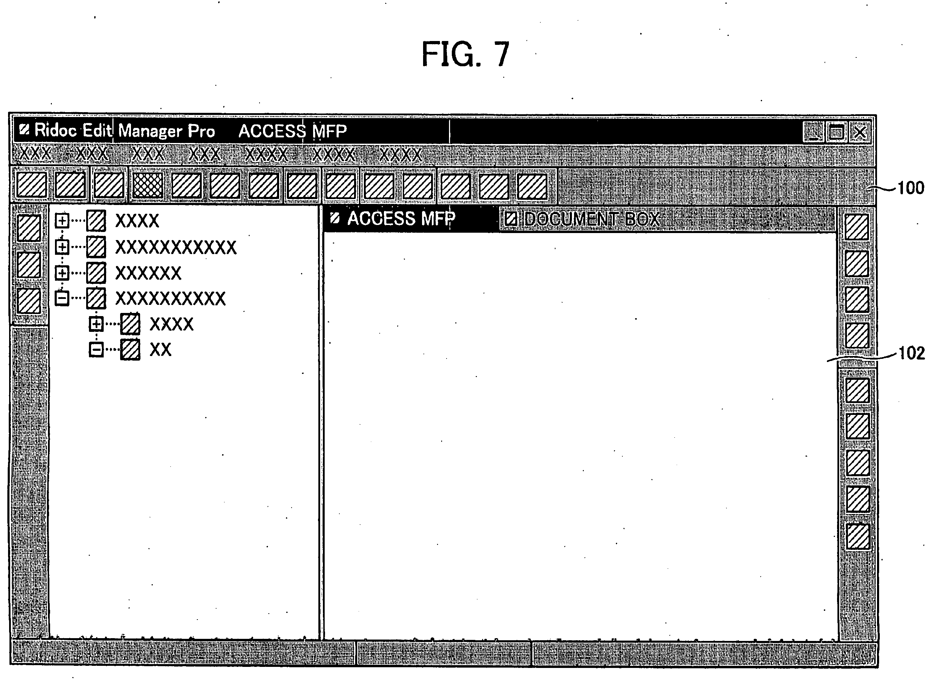

FIG. 7 is a display example illustrating GUI 100 showing documents which can be processed with the client terminal equipment of the document edit system of FIG. 1. This figure is displayed at Step S102 of FIG. 6. A window 102 including a map display domain and a document display domain on which the document is displayed as tree structure is provided in GUI 100. An editor notifies the input event such as clicking "MFP" to the client terminal equipment 14 through GUI shown in FIG. 7. The client terminal equipment 14 creates a document read demand packet encapsulated with an own terminal discernment name, and sends out through the network 18. When the document which can be read is stored in the MFP 12, a document discernment value etc. is displayed in the window 102 of the client terminal equipment 14. The editor of the client terminal equipment 14 clicks the document discernment value or the thumbnail displayed in the window 102, and generates a download demand event. The client terminal equipment 14 generates the instructions which download the file of the corresponding document. The download demand packet is sent out to the MFP 12 through the MFP communications processing section 76 and the network control section 78.

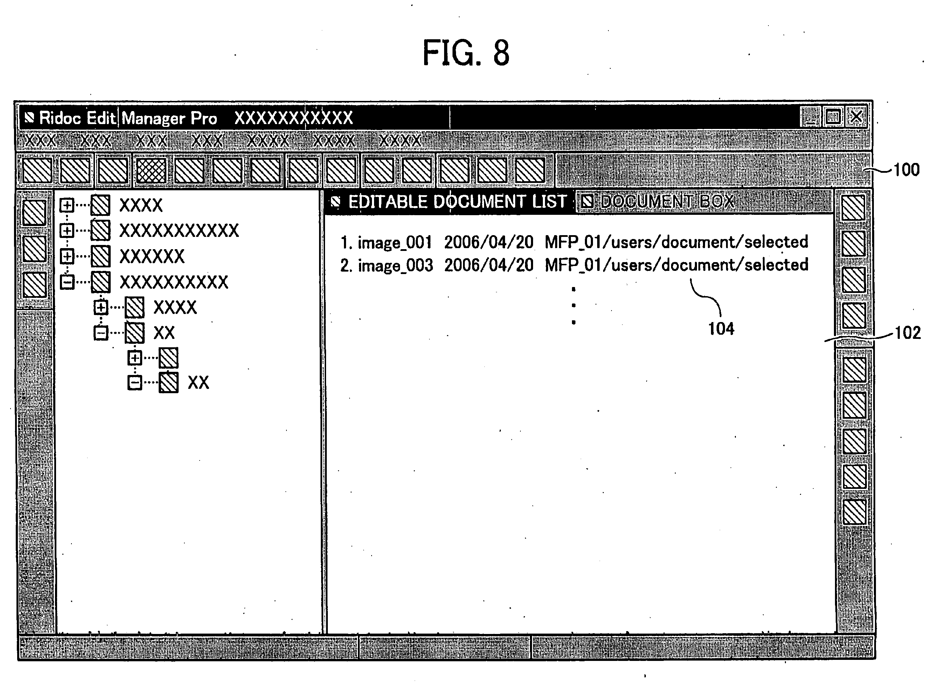

FIG. 8 is a display example illustrating GUI 100 showing documents which can be processed with the client terminal equipment of the document edit system of FIG. 1. This figure is displayed at Step S103 of FIG. 6. The figure includes the document discernment value 104 of the document which an editor can edit as a result of the document read demand. As shown in FIG. 8, in the window 102, the document discernment value of the document which an editor can edit is listed. This list is a result of searching from a read demand of document when the MFP 12 receives the read demand using a terminal discernment value as a search key.

The document discernment value 104 shown in FIG. 8 is similarly defined as a hot spot in the window 102, when the document discernment value 104 is displayed as a thumbnail. If mouse cursor is placed on the document discernment value 104 and input events such as a double click, the edit processing section 66 can notify to the information processing section 74, and the download processing section 64 is called and download processing is started.

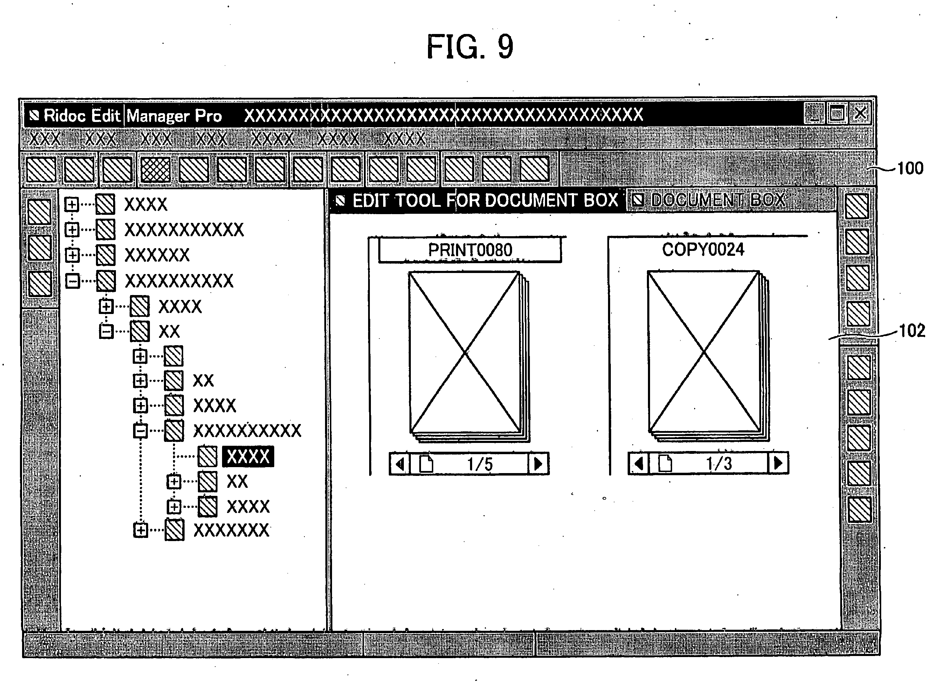

FIG. 9 is a display example illustrating GUI 100 showing documents after editing and storing into the storage 70 in order to order the end post-processing of Step S106, which can be processed with the client terminal equipment of the document edit system of FIG. 1. As shown in FIG. 9, the edited document is displayed on the window 102 as a thumbnail etc. A user can commands processing after the end by placing and double-clicking a mouse icon, etc. to the domain of the document shown in the window 102. In the example of FIG. 9, the editor wishes to have the print of the edited document.

At this time, the editor who is operating the client terminal equipment 14 double-clicks the domain where the document of GUI displayed on the display unit 82. The notice of the print instruction event through the display processing section is notified to the edit control section 66. Furthermore, it is notified to the information processing section 74, and the information processing section 74 generates print instructions. The client terminal equipment 14 transmits the document to the printer of a default setup, the MFP, or the image processing unit according to the kind of the document. After printing, the processing is ended.

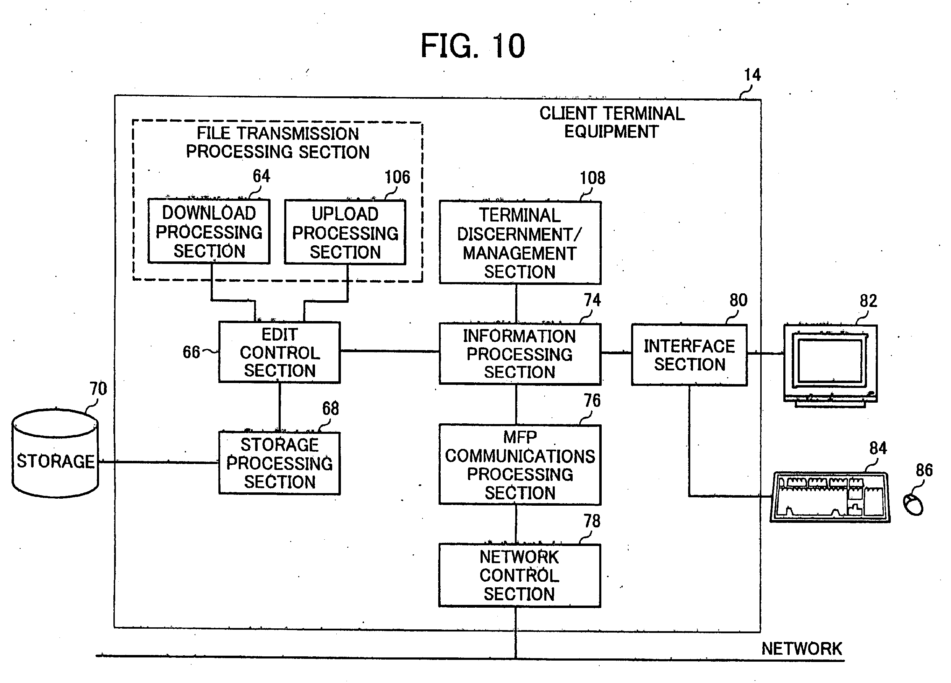

FIG. 10 is a block diagram illustrating an outline of second example of configuration of the client terminal equipment 14 of the document edit system of FIG. 1. The client terminal equipment 14 shown in FIG. 10 has almost same composition as the client terminal equipment 14 shown in FIG. 4. The difference is that the client terminal equipment 14 shown in FIG. 10 includes an upload processing section 106, and a terminal discernment/management section 108. The upload processing section 106 and the download processing part 64 are combined, so that a file transmission processing section of this invention is constituted. Transmission and reception of the file through the port numbers 20 and 21 (FTP) or the port number 69 (TFTP) are performed. The client terminal equipment 14 shown in FIG. 10 has the upload processing section 106 and can transmit data which is the edited document or a next editor of the edited document to the MFP 12.

The terminal discernment/management section 108 shown in FIG. 10 acquires a terminal identifier of the client terminal equipment 14, and also has registered each terminal discernment value which constitutes a work group. The terminal discernment value in the work group is displayed on the display unit 82 through GUI. Furthermore, the client terminal equipment 14 shown in FIG. 10 performs correction of the editor name or a terminal discernment value accidentally registered into the MFP 12, exclusive management of an editorial-rights, specification of the following editor, change of the editor name due to timeout, etc. Therefore, when enabling edit of the document by a two or more person, more efficient edit processing can be offered.

All client terminal equipments 14 can be equipped with the upload processing section 106 of the client terminal equipment 14 shown in FIG. 10. Moreover, the function to perform correction of an editor name etc. can be applied only in the specific client terminal equipment 14 which a work group administrator uses the function in order to improve security. In performing editor change processing, an input of a password or User ID is required and a transaction under a different protocol from a file transmission protocol is executed. The editor change processing is permissible under predetermined change right.

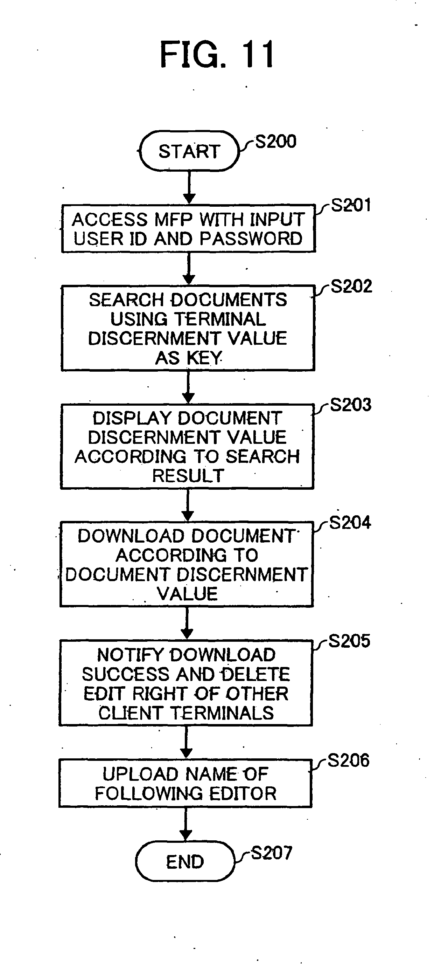

FIG. 11 is a flowchart illustrating a processing of the client terminal equipment as a second example of FIG. 10 in the document edit system of FIG. 1. The processing starts from Step S200, and the MFP 12 is accessed entering User ID and a password at Step S201. At Step S202, the own terminal discernment value as a search key is transmitted to the MFP 12, and the MFP 12 searches the document. The document discernment value is acquired by responding to the search results, and the document discernment value is displayed on GUI at Step S203.

At Step S204, the document specified with the document discernment value is downloaded. At Step S205, the client equipment 14 notifies the download success to the MFP 12. The MFP 12 performs processing which erases the editorial-rights of the other client terminal equipments to the same document due to a document read demand. The erasing editorial-rights processing can use, for example, a processing which overwrites the field 62 of the look-up table 58 shown in FIG. 3 according to the terminal discernment value corresponding to the client equipment 14 specified with the notice of the download success, or a processing which deletes registration terminal discernment values other than the terminal discernment value corresponding to the client terminal equipment 14 which has generated the notice of the download success. Since the processing of Step S205 holds data consistency of the edited document, it is desirable to use the processing especially when performing cooperated edit processing.

Furthermore, edit processing of the document is performed at Step S206. The terminal discernment value which specifies the following editor acquired with the terminal discernment/management section 108 is uploaded to the MFP 12. A move of edit processing is enabled and the processing is ended at Step S207.

The processing shown in FIG. 11 makes it possible to transfer the editorial-rights in an acquisition-in-advance way to the client terminal equipment 14, when the editor name which can be edited is assigned to the same document. Therefore, a fall of consistency of the document by a duplication edit, etc. Furthermore, it becomes possible to upload the document after edit and the following editor into the MFP 12. Therefore, a name of editor can be corrected or changed even when the editor name is registered by an input operator incorrectly or when edit by the client terminal equipment specified by a specific editor name is overdue. The efficiency of document edit can be improved.

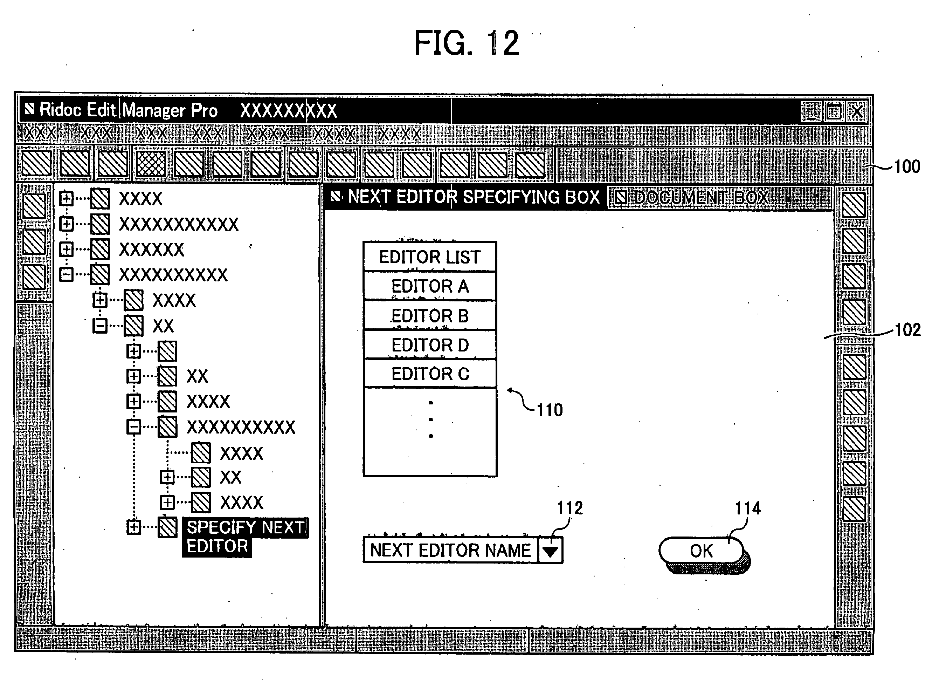

FIG. 12 is a display example illustrating GUI shown by an order of the edit control section 66 according to an order, which specifies the next editor, from the client terminal equipment 14 at Step S206 of the document edit system of FIG. 1. In FIG. 12, the display "specify next editor" is given to the window 102, and after the edit is completed, GUI which makes it possible to specify the next editor is displayed. The client terminal equipment 14 carries out lookup of the address list about the client terminal equipment 14 which has participated in the network at the time, and acquires the list of terminal discernment values registered into the address list. The client terminal equipment 14 displays the list of acquired terminal discernment values as an editor list 110.

A pull-down menu 112 for specifying an editor name in a window 102 is displayed. It is possible to specify the following editor directly from the pull-down menu 112. The editor who uses the client terminal equipment 14 refers to the editor list 110 next. The editor who should be chosen is chosen using the pull-down menu 112. Then, the following editor name and the following edited document to be requested by clicking and choosing "O.K." button through GUI can be uploaded to the MFP 12 by starting the upload processing section 106. Any GUI which offers the similar functions can be used in this invention for specifying the next editor.

The MFP 12 updates the record of the look-up table 58 stored in the MFP 12, if the following editor name and the next edited document are received. An edit right of management of the edited document which received can be transferred to the newly specified editor C, for example, and the following processing can be requested. Processing of transferring can be performed by processing which overwrites a specified document and a terminal discernment value corresponding to the document discernment value with an edited document and terminal discernment value corresponding to the next editor, respectively. By this processing, the edited document can not be read with the client terminal equipment which is managed by the other editor of specified person. Therefore, a reliable cooperation edit can be attained.

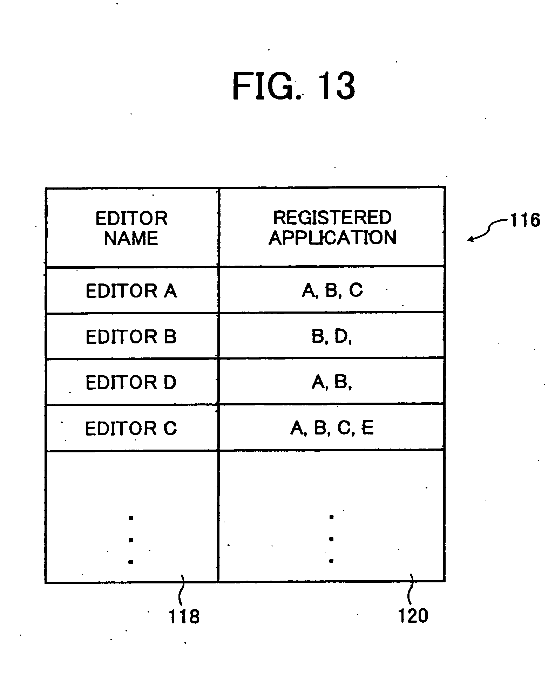

As mentioned above, it cannot be concerned with whether it logs on to the network 18, but can also choose from the client terminal equipment 14 registered into the work group, or from the client terminal equipment which logs on to the work group at the time. Responding to the application environment which the client terminal equipment holds, and the following editor can also be specified. FIG. 13 is a table illustrating an application list stored in a memory space of the client terminal equipment of the document edit system of FIG. 1.

A form which chooses the following editor using an application list 116 is appropriately provided when all the client terminal equipments of a work group cannot be found in the same application environment. The application list is collectively registered into the MFP 12 etc., and the client terminal equipment 14 can also download it from the MFP 12 using TFTP or an FTP protocol. The application list can also be beforehand registered to each the client terminal equipment 14.

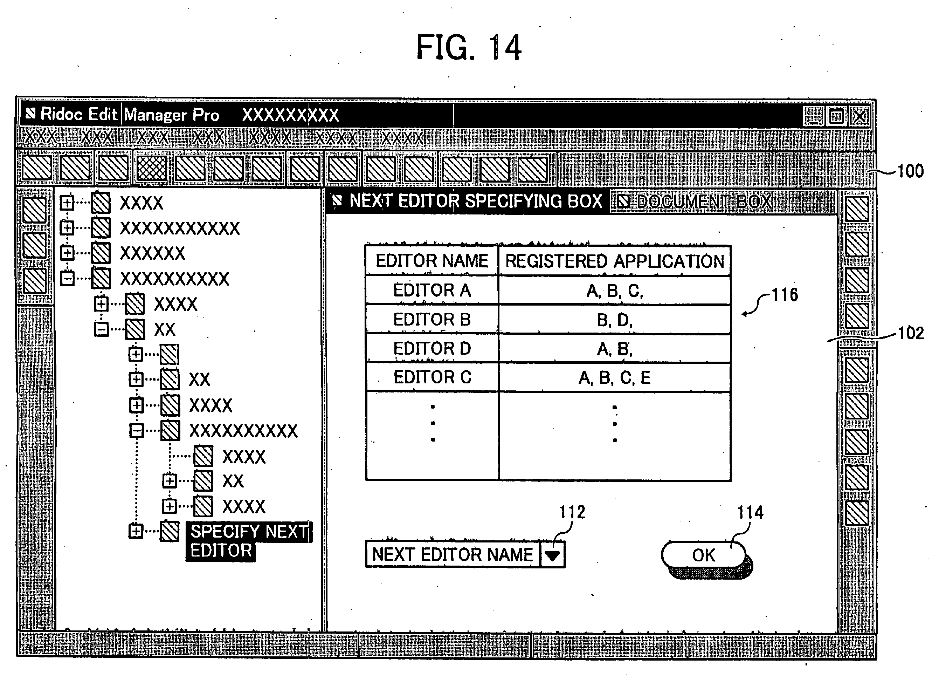

As the table in FIG. 13, a field 118 which registers the terminal discernment value, and a field 120 which lists a corresponding registration application registered into a predetermined client terminal equipment form a record. The client terminal equipment 14 calls the edit control section 66, the information processing section 74, and the terminal discernment/management section 108, when the input event which specifies the following editor through GUI by processing of Step S206 of FIG. 11 is received. The application list 116 shown in FIG. 13 is read, and GUI shown in FIG. 14 is displayed to the display processing section.

FIG. 14 is a display example illustrating GUI 100 shown by using an application list 116 of the document edit system of FIG. 1. The read application list 116 is displayed on the window 102. The editor who uses the concerned client terminal equipment can know a registration application registered into the client terminal equipment which each editor manages.

An editor who operates the client terminal equipment 14 refers to the application list 116 displayed in the window 102. The following editor is chosen using a pull-down menu 112 formed in the window 102 bottom. An "O.K." button 114 is clicked after that. API of a display processing section responds to an input event concerned, and calls the edit control section 66 and the information processing section 74, the upload processing section 106, etc. A file write-in instructions based on TFTP, FTP, or HTTP protocol are transmitted to the MFP 12. The MFP 12 receives the terminal discernment value and the edited document corresponding to the transmitted following editor name. Each field of the record of the corresponding document discernment value is updated.

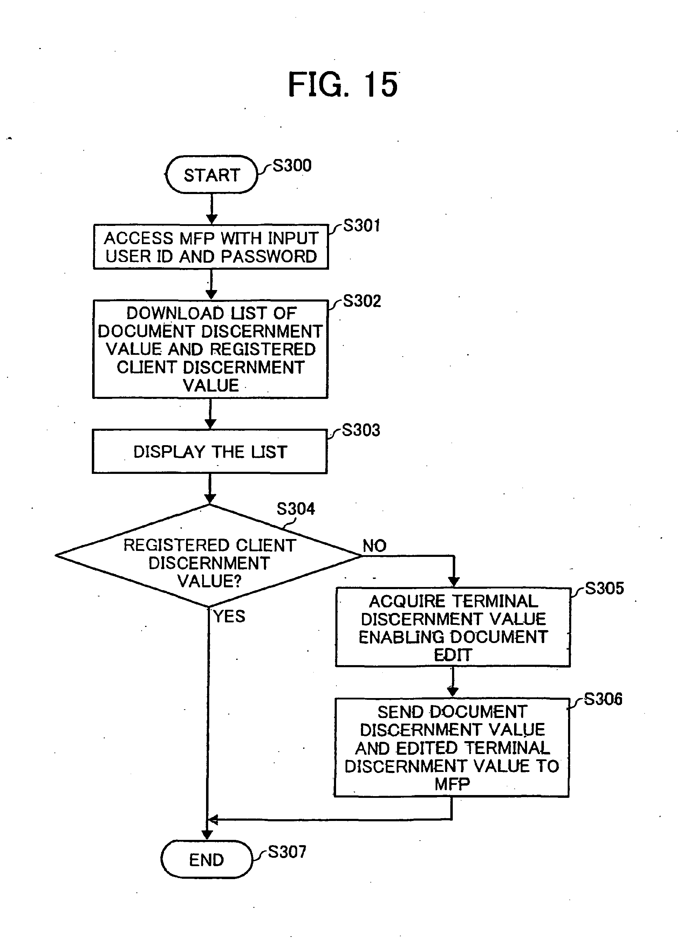

FIG. 15 is a flowchart illustrating a processing of the terminal discernment/management section 108 of the client terminal equipment of the document edit system of FIG. 1. The management processing is started from Step S300. At Step S301, User ID and a password are transmitted to the MFP 12, and the MFP 12 is accessed. At Step S302, a list which includes a document discernment value and a registered client discernment value from the MFP 12 is downloaded. The list acquired at Step S303 is displayed on the display unit 82 of the client terminal equipment 14.

At Step S304, each client registered into the MFP 12 at the time is checked. At Step S304, the terminal discernment/management section 108 judges whether the client discernment value is unjustly input due to input mistake etc., looking up the client terminal equipment list which constitutes a work group. When it is judged that it is not registered in the client terminal equipment list, but the terminal discernment value which is not regular is registered (no), the processing goes to Step S305. The terminal discernment value of the client terminal equipment in which document edit is possible is acquired from the terminal discernment value of the client terminal equipment registered into the address list. A display processing section is started and it is displayed on GUI. An editor chooses the terminal discernment value displayed on GUI, and acquires a regular terminal discernment value.

At Step S306, the acquired regular terminal discernment value and the document discernment value into which the unjust terminal discernment value is registered are sent, and a terminal discernment value of the corresponding record is replaced with the regular terminal discernment value. The processing is ended at Step S307.

At Step S304, when all the acquired terminal discernment values are in agreement with the registered terminal discernment values and it is judged that the terminal discernment value which is not registered into the work group and which is not regular does not exist (yes), the processing goes to Step S307 and the processing is ended. Whether the client terminal equipment concerned logs on a work group or whether the value of the unprocessed timer counted up until download of a document requested from the client terminal equipment is performed is not over the predetermined threshold can be judged in this invention.

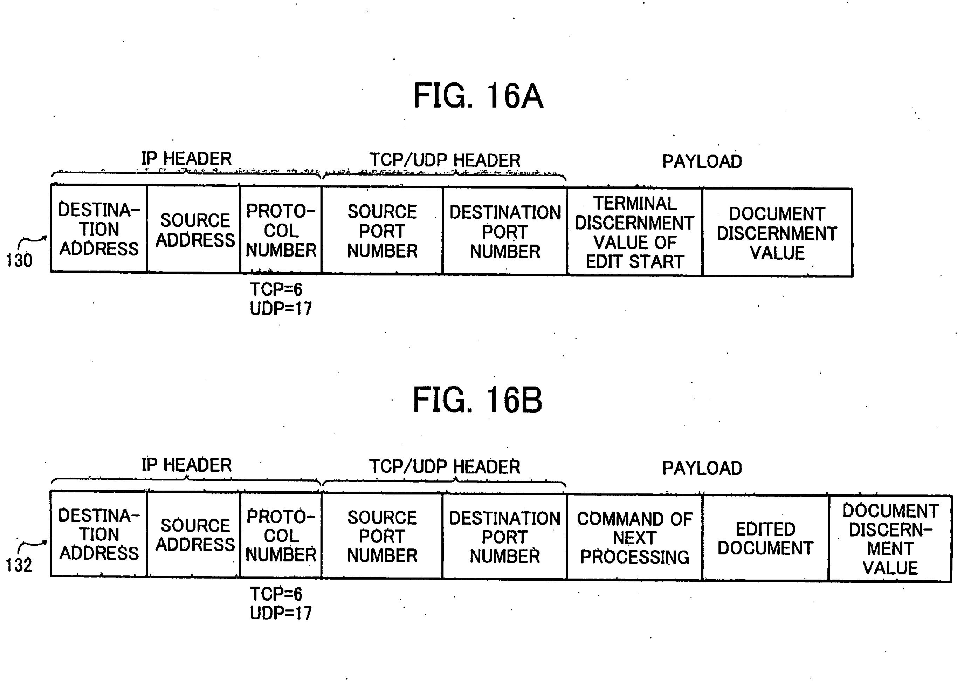

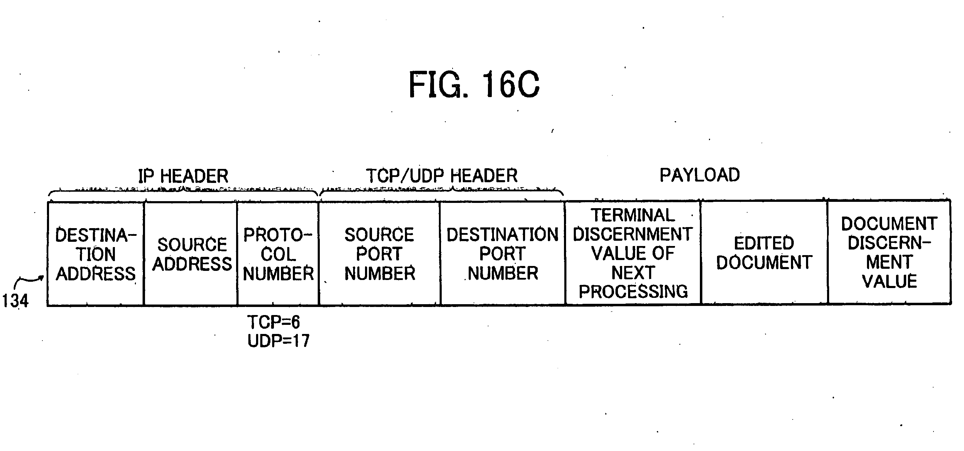

FIG. 16A to FIG. 16C are block diagrams illustrating a packet form sent out from the MFP communications processing section 76 and the network control section 78 of the client terminal equipment 14 of the document edit system of FIG. 1. FIG. 16A shows a packet 130 for notifying that the client terminal equipment has downloaded the document to be edited and has acquired the editorial-rights to the MFP 12. FIG. 16B shows a packet 132 created in order to notify the next processing to the MFP 12. FIG. 16C shows a packet 134 created in order to specify an editor who performs the next processing. Although it is explained that the packets are TCP/IP packet for convenience, UDP (User Datagram Protocol) can also be used. At this time, the protocol number of IP header portion is replaced and a TCP header is replaced by a UDP header.

In FIG. 16A, the packet 130 is created as TCP/IP packet, and is constituted including IP header, TCP/UDP header, and payload. The frame header which contains a MAC address is omitted for convenience. The IP address of the MFP 12 is registered into the IP header as a destination address. The IP address of the client terminal equipment is registered into a source address.

A source port number and a destination port number are registered into the TCP/UDP header. In the case of an FTP protocol, the port numbers 20 or 21 are registered. When performing file transmission by a TFTP protocol, the port number 69 assigned to UDP is registered. The terminal discernment value of the client terminal equipment which has started edit, and the document discernment value which has started edit are registered into the payload. The payload can include another data.

The terminal discernment value and the document discernment value of the document which has acquired the editorial-right are included in the payload in order to notify having downloaded the document for edit and having acquired the editorial-rights. A document read demand is created when performing processing which manages an editorial-rights, and the document read demand is transmitted to the MFP 12.

An FTP protocol is used when a specific user ID and an input of a password are needed for preventing change of an editor name by the arbitrary input operating of editors. About the download demand packet from the specified editor name, the time and effort of input operation is saved using UDP/IP packet. Therefore, the workability within a work group is improved. Access to the MFP 12 from the client terminal equipment can always be performed by an FTP protocol. A telnet protocol can be used and a remote logon of the client terminal equipment can also be carried out to the MFP 12 using a password or User ID. After that, processing can be performed with simple file transmission protocols, such as a TFTP protocol, etc.

In FIG. 16B, a next processing to the MFP 12 (e.g. a command for ordering a print, a facsimile, or E-mail transmission), the edited document for processing, the document discernment value, etc. are registered in the payload. This is generated when ordering a next processing to the MFP 12, and it is sent out in the network 18.

In FIG. 16C, the packet 134 is a packet in the case of specifying the following editor the from client terminal equipment. The packet 134 is created, when the editor who is operating client terminal equipment has to specify the following editor by a flow of document edit or specifies the following editor through GUI with reference to registered application, and the packet 134 is transmitted to the MFP 12. The MFP 12 registers the edited document and the following editor according to the specified document discernment value, when the packet of FIG. 16C is received. The editorial-right is transferred to the next editor.

In this invention, with the processing mentioned above, edit processing in the work group constituted including two or more cooperated client terminal equipments and MFP can be performed efficiently.

The above-mentioned function is realizable with an equipment in which execution is possible with a program described in object-oriented program languages such as C, C++, Java (registered trademark), Java(registered trademark) Beans, Java (registered trademark) Applet, Java(registered trademark) Script, Perl, Ruby, etc. The program can be stored and distributed by using a readable recording medium. This invention is not limited to the form of example shown in the drawings, and can be changed into other forms, for example, an addition, a change, a deletion, etc. can be possible within limits which other skilled person can do it, and as long as this invention has effect in the any form, the form is included in the range of this invention.

This invention is not limited to the above-mentioned example, when carrying out this invention, they may have a suitable number, a position, form, etc.

Numerous additional modifications and variations are possible in light of the above teachings. It is therefore to be understood that within the scope of the appended claims, the disclosure of this patent specification may be practiced otherwise than as specifically described herein.

## Claims

1. A client terminal equipment (14-14e) configured to perform edit processing of a document through a network (18), comprising:
a display unit (82) configured to display a graphical user interface which is configured to be commanded by a user;
an edit control section (66) configured to command an image processing apparatus (28, 30, 32, 34) connected to the network to download the document using a terminal discernment value;
a terminal discernment section (72) arranged to manage a list of the terminal discernment values of the client terminal equipments (14-14e) which constitute a work group in the network; and
an information processing section (74) configured to control access to the document using the list of the terminal discernment values between the edit control section (66) and the terminal discernment section (72).

2. The client terminal equipment of claim 1, further comprising:
a file transmission processing section (40, 44) arranged to perform download and upload of a document with the image processing apparatus (28, 30, 32, 34) under an access control by the information processing section; and
a storage processing section (42) configured to perform processing to store the downloaded document.

3. The client terminal equipment of claim 2,
wherein the information processing section (74) is arranged to notify a successful download to the image processing apparatus (28, 30, 32, 40), and makes the client terminal equipment (14-14e), which has succeeded in the download, occupy an editorial right of the downloaded document to the image processing apparatus.

4. The client terminal equipment of claim 2 or 3,
wherein the information processing section (74) is configured to select the terminal discernment value commanded from the graphical user interface (82), and upload the selected terminal discernment value into the image processing apparatus (28, 30, 32, 34) as a terminal discernment value of a next editing client terminal equipment with an edited document.

5. The client terminal equipment of at least one of the claims 2 to 4,
wherein the file transmission processing section (40, 44) is arranged to download the terminal discernment value registered into the image processing apparatus (28, 30, 32, 34), and when the terminal discernment value is not regular, a regular terminal discernment value acquired through the graphical user interface (82) is arranged to be uploaded to the image processing apparatus.

6. The client terminal equipment of at least one of the claims 2 to 5,
wherein when the terminal discernment value registered into the image processing apparatus is downloadable and a certification processing is configured to be performed through the graphical user interface.

7. A document edit system (10) configured to perform edit processing of a document through a network (18), comprising:
a plurality of client terminal equipments according to claim 1, wherein
the image processing apparatus (28, 30, 32, 34) is configured to respond to a document demand from the client terminal equipment, to search the document by using the terminal discernment value included in the document demand as a search key, and to download the searched document to the client terminal equipment which has made the demand.

8. The document edit system of claim 7,
wherein the client terminal equipment includes
a file transmission processing section (40, 44) configured to perform download and upload of a document with the image processing apparatus (28, 30, 32, 34) under an access control by the information processing section, and
a storage processing section (42), to perform processing to store the downloaded document.

9. A computer program product implementable in client terminal equipment (14-14e) configured to perform edit processing of a document through a network (18), the processing comprising:
displaying a graphical user interface, which is commanded by a user;
commanding an image processing apparatus (28, 30, 32, 34) connected to the network to access the document using a terminal discernment value;
managing a list of the terminal discernment values of the client terminal equipments, which constitute a work group in the network;
controlling access to the document using the list of the terminal discernment values between an edit control section (66) and a terminal discernment section (72);
downloading the document with the image processing apparatus under conditions that the access is controlled; and
storing the downloaded document with the storage processing section (42).

10. The computer program product of claim 9, the processing further comprising:
notifying a success of the download to the image processing apparatus; and
making the client terminal equipment, which has succeeded in the download, occupy an editorial right of the downloaded document to the image processing apparatus.

11. The computer program product of claim 9 or 10, the processing further comprising:
selecting the terminal discernment value commanded from the graphical user interface; and
uploading the selected discernment value into the image processing apparatus as a terminal discernment value of a next editing client terminal equipment with an edited document.

12. The computer program product of at least one of the claims 9 to 11, the processing further comprising:
downloading the terminal discernment value registered into the image processing apparatus;
uploading a regular terminal discernment value acquired through the graphical user interface into the image processing apparatus when the terminal discernment value of previous action is not regular; and
performing a certification processing through the graphical user interface when the terminal discernment value registered into the image processing apparatus is downloaded.

13. A method of performing edit processing of a document through a network using a client terminal equipment (14-14e), the method including the actions of:
displaying a graphical user interface using a display unit (82), which is commandable by a user;
commanding an image processing apparatus (28, 30, 32, 34), using an edit control section (66), to download a document from the network (18) using a terminal discernment value;
managing a list of the terminal discernment values of the client terminal equipments (14-14e), which constitutes a work group in the network (18), using a terminal discernment section; and
controlling access to the document using an information processing section (74) that uses the list of the terminal discernment values between the edit control section (66) and the terminal discernment section (72).

14. A method according to claim 13, wherein downloading and uploading of a document with the image processing apparatus (28, 30, 32, 40) under an access control by the information processing section is performed by a file transmission processing section (40, 44); and
performing processing to store the download document using a storage processing section (42).

15. A method according to claim 14, wherein
the information processing section (74) is arranged to notify a successful download to the image processing apparatus (28, 30, 32, 40), and makes the client terminal equipment (14-14e) which has succeeded in the download, occupy an editorial right of the download document to the image processing apparatus (28, 30, 32, 34).

16. A method according to claim 14 or 15, wherein
the image processing section selects the terminal discernment value commanded from the graphical user interface, and uploads the selected terminal discernment value into the image processing apparatus (28, 30, 32, 34) as a terminal discernment value of a next editing client terminal equipment (14-14e) with an edited document.

17. A method according to any one of claims 14 to 16,
wherein
the file transmission processing section arranges to download the terminal discernment value registered into the image processing apparatus (28, 30, 32, 34), and when the terminal discernment value is not regular terminal discernment values are acquired through the graphical user interface which is arranged to be uploaded to the image processing apparatus (28, 30, 32, 34).

18. A method according to any one of claims 14 to 17,
wherein
when the terminal discernment value registered into the image processing apparatus is downloaded and a certification process is configured to be performed through the graphical user interface.

## Patentansprüche

1. Client-Endgeräteeinrichtung (14-14e), dafür konfiguriert, Bearbeitungsverarbeitung eines Dokuments über ein Netzwerk (18) durchzuführen, umfassend:
eine Anzeigeeinheit (82), die dafür konfiguriert ist, eine graphische Benutzerschnittstelle darzustellen, die dafür konfiguriert ist, durch einen Benutzer gesteuert zu werden;
einen Bearbeitungssteuerungsabschnitt (66), der dafür konfiguriert ist, eine mit dem Netzwerk verbundene Bildverarbeitungsvorrichtung (28, 30, 32, 40) zu steuern, um das Dokument unter Verwendung eines Endgerätebefugniswerts herunterzuladen;
einen Endgerätebefugnisabschnitt (72), der dafür eingerichtet ist, eine Liste der Endgerätebefugniswerte der Client-Endgeräteeinrichtungen (14-14e), die eine Arbeitsgruppe im Netzwerk bilden, zu verwalten;
einen Informationsverarbeitungsabschnitt (74), der dafür konfiguriert ist, den Zugriff auf das Dokument unter Verwendung der Liste der Endgerätebafugniswerte zwischen dem Bearbeitungssteuerungsabschnitt (66) und dem Endgerätebefugnisabschnitt (72) zu steuern.

2. Client-Endgeräteeinrichtung nach Anspruch 1, ferner umfassend:
einen Dateiübertragungsverarbeitungsabschnitt (40, 44), der dafür konfiguriert ist, das Herunterladen und Hochladen eines Dokuments mit der Bildverarbeitungsvorrichtung (28, 30, 32, 34) unter Zugriffssteuerung durch den Informationsverarbeitungsabschnitt durchzuführen; und
einen Speicherverarbeitungsabschnitt (42), der dafür konfiguriert ist, Verarbeitung durchzuführen, um das heruntergeladene Dokument zu speichern.

3. Client-Endgeräteeinrichtung nach Anspruch 2,
worin der Informationsverarbeitungsabschnitt (74) dafür eingerichtet ist, die Bildverarbeitungsvorrichtung (28, 30, 32, 34) über ein erfolgreiches Herunterladen zu benachrichtigen, und bewirkt, dass die Client-Endgeräteeinrichtung (14-14e), die beim Herunterladen erfolgreich war, ein Bearbeitungsrecht des heruntergeladenen Dokuments von der Bildverarbeitungsvorrichtung in Anspruch nimmt.

4. Client-Endgeräteeinrichtung nach Anspruch 2 oder 3,
worin der Informationsverarbeitungsabschnitt (74) dafür konfiguriert ist, den von der graphischen Benutzerschnittstelle (82) gesteuerten Endgerätebefugniswert auszuwählen und den ausgewählten Endgerätebefugniswert als einen Endgerätebefugniswert einer nächsten bearbeitenden Client-Endgeräteeinrichtung mit einem bearbeiteten Dokument in die Bildverarbeitungsvorrichtung (28, 30, 32, 34) hochzuladen.

5. Client-Endgeräteeinrichtung nach mindestens einem der Ansprüche 2 bis 4,
worin der Dateiübertragungsverarbeitungsabschnitt (40, 44) dafür eingerichtet ist, den in der Bildverarbeitungsvorrichtung (28, 30, 32, 34) registrierten Endgerätebefugniswert herunterzuladen, und wenn der Endgerätebefugniswert nicht regelmäßig ist, wird ein über die graphische Benutzerschnittstelle (82) erlangter regelmäßiger Endgerätebefugniswert dafür eingerichtet, zur Bildverarbeitungsvorrichtung hochgeladen zu werden.

6. Client-Endgeräteeinrichtung nach mindestens einem der Ansprüche 2 bis 5,
worin, wenn der in der Bildverarbeitungsvorrichtung registrierte Endgerätebefugniswert herunterladbar ist, und ein Zertifizierungsprozess dafür konfiguriert wird, über die graphische Benutzerschnittstelle durchgeführt zu werden.

7. Dokumentbearbeitungssystem (10), dafür konfiguriert, Bearbeitungsverarbeitung eines Dokuments über ein Netzwerk (18) durchzuführen, umfassend:
eine Vielzahl von Client-Endgeräteeinrichtungen nach Anspruch 1, worin
die Bildverarbeitungsvorrichtung (28, 30, 32, 34) dafür konfiguriert ist, auf eine Dokumentanforderung von der Client-Endgeräteeinrichtung hin das Dokument durch Verwenden des in die Dokumentanforderung eingeschlossenen Endgerätebefugniswerts als Suchschlüssel zu suchen und das gesuchte Dokument zu der Client-Endgeräteeinrichtung herunterzuladen, welche die Anforderung gestellt hat.

8. Dokumentbearbeitungssystem nach Anspruch 7,
worin die Client-Endgeräteeinrichtung aufweist:
einen Dateiübertragungsverarbeitungsabschnitt (40, 44), der dafür konfiguriert ist, das Herunterladen und Hochladen eines Dokuments mit der Bildverarbeitungsvorrichtung (28, 30, 32, 34) unter einer Zugriffssteuerung durch den Informationsverarbeitungsabschnitt durchzuführen; und
einen Speicherverarbeitungsabschnitt (42), der dafür konfiguriert ist, Verarbeitung durchzuführen, um das heruntergeladene Dokument zu speichern.

9. Computerprogrammprodukt, implementierbar in einer Client-Endgeräteeinrichtung (14-14e), dafür konfiguriert, Bearbeitungsverarbeitung eines Dokuments über ein Netzwerk (18) durchzuführen, wobei die Verarbeitung umfasst:
Anzeigen einer graphischen Benutzerschnittstelle, die durch einen Benutzer gesteuert wird;
Anweisen einer mit dem Netzwerk verbundenen Bildverarbeitungsvorrichtung (28, 30, 32, 34), unter Verwendung eines Endgerätebefugniswerts auf das Dokument zuzugreifen;
Verwalten einer Liste der Endgerätebefugniswerte der Client-Endgeräteeinrichtungen, die eine Arbeitsgruppe in dem Netzwerk bilden;
Steuern des Zugriffs auf das Dokument unter Verwendung der Liste der Endgerätebefugniswerte zwischen einem Bearbeitungssteuerungsabschnitt (66) und einem Endgerätebefugnisabschnitt (72);
Herunterladen des Dokuments mit der Bildverarbeitungsvorrichtung unter der Bedingung, dass der Zugriff gesteuert wird; und
Speichern des heruntergeladenen Dokuments mit dem Speicherverarbeitungsabschnitt (42).

10. Computerprogrammprodukt nach Anspruch 9, wobei die Verarbeitung ferner umfasst:
Benachrichtigen der Bildverarbeitungsvorrichtung über einen Erfolg des Herunterladens; und
Bewirken, dass die Client-Endgeräteeinrichtung, die beim Herunterladen erfolgreich war, ein Bearbeitungsrecht des heruntergeladenen Dokuments von der Bildverarbeitungsverrichtung in Anspruch nimmt.

11. Computerprogrammprodukt nach Anspruch 9 oder 10, wobei die Verarbeitung ferner umfasst:
Auswählen des von der graphischen Benutzerschnittstelle aus gesteuerten Endgerätebefugniswerts; und
Hochladen des ausgewählten Befugniswerts mit einem bearbeiteten Dokument in die Bildverarbeitungsvorrichtung als einen Endgerätebefugniswert einer nächsten bearbeitenden Client-Endgeräteeinrichtung.

12. Computerprogrammprodukt nach mindestens einem der Ansprüche 9 bis 11, wobei die Verarbeitung ferner umfasst:
Herunterladen des in der Bildverarbeitungsvorrichtung registrierten Endgerätebefugniswerts;
Hochladen eines über die graphische Benutzerschnittstelle erlangten regelmäßigen Endgerätebefugniswerts zur Bildverarbeitungsvorrichtung, wenn der Endgerätebefugniswert der vorigen Aktion nicht regelmäßig ist; und
Durchführen einer Zertifizierungsverarbeitung über die graphische Benutzerschnittstelle, wenn der in der Bildverarbeitungsvorrichtung registrierte Endgerätebefugniswert heruntergeladen wird.

13. Verfahren zum Durchführen der Bearbeitungsverarbeitung eines Dokuments über ein Netzwerk unter Verwendung einer Client-Endgeräteeinrichtung (14-14c), wobei das Verfahren die Aktionen einschließt:
Anzeigen einer graphischen Benutzerschnittstelle unter Verwendung einer Anzeigeeinheit (82), die durch einen Benutzer gesteuert werden kann;
Anweisen einer Bildverarbeitungsvorrichtung (28, 30, 32, 34) unter Verwendung eines Bearbeitungssteuerungsabschmitts (66), ein Dokument vom Netzwerk (18) unter Verwendung eines Endgerätebefugniswerts herunterzuladen;
Verwalten einer Liste der Endgerätebefugniswerte der Client-Endgeräteeinrichtungen (14-14e), die eine Arbeitsgruppe im Netzwerk (18) bildet, unter Verwendung eines Endgerätebefugnisabschritts; und
Steuern des Zugriffs auf das Dokument unter Verwendung eines Informationsverarbeitungsabschnitts (74), der die Liste der Endgerätebefugniswerte zwischen dem Bearbeitungssteuerungsabschnitt (66) und dem Endgerätebefugnisabschnitt (72) verwendet.

14. Verfahren nach Anspruch 13, worin
das Herunterladen und Hochladen eines Dokuments mit der Bildverarbeitungsvorrichtung (28, 30, 32, 34) unter einer Zugriffssteuerung durch den Informationsverarbeitungsabschnitt durch einen Dateiübertragungsverarbeitungsabschnitt (40, 44) durchgeführt wird;
die Durchführung von Verarbeitung umfasst, um das heruntergeladene Dokument zu speichern, unter Verwendung eines Speicherverarbeitungsabschnitts (42).

15. Verfahren nach Anspruch 14, worin
der Informationsverarbeitungsabschnitt (74) dafür eingerichtet ist, die Bildverarbeitungsvorrichtung (28, 30, 32, 34) über ein erfolgreiches Herunterladen zu benachrichtigen, und bewirkt, dass die Client-Endgeräteeinrichtung (14-14c), die beim Herunterladen erfolgreich war, ein Bearbeitungsrecht des heruntergeladenen Dokuments von der Bildverarbeitungsvorrichtung (28, 30, 32, 34) in Anspruch nimmt.

16. Verfahren nach Anspruch 14 oder 15, worin
der Informationsverarbeitungsabschnitt den über die graphische Benutzerschnittstelle gesteuerten Endgerätebefugniswert auswählt und den ausgewählten Endgerätebefugniswert als einen Endgerätebefugniswert einer nächsten bearbeitenden Client-Endgeräteeinrichtung (14-14e) mit einem bearbeiteten Dokument in die Bildverarbeitungsvorrichtung (28, 30, 32, 34) hochlädt.

17. Verfahren nach einem der Ansprüche 14 bis 16, worin
der Dateiübertragungsverarbeitungsabschnitt es einrichtet, den in der Bildverarbeitungsvorrichtung (28, 30, 32, 34) registrierten Endgerätebefugniswert herunterzuladen, und wenn der Endgerätebefugniswert nicht regelmäβig ist, werden Endgerätebefugniswerte über die graphische Benutzerschnittstelle erlangt und dafür eingerichtet, zur Bildverarbeitungsvorrichtung (28, 30, 32, 34) hochgeladen zu werden.

18. Verfahren nach einem der Ansprüche 14 bis 17, worin
der in der Bildverarbeitungsvorrichtung registrierte Endgerätebefugniswert hezuntergeladen wird und ein Zertifizierungsprozess dafür konfiguriert wird, über die graphische Benutzerschnittstelle durchgeführt zu werden.

## Revendications

1. Équipement terminal client (14-14e) configuré de manière à mettre en oeuvre un traitement d'édition d'un document par l'intermédiaire d'un réseau (18), comprenant :
une unité d'affichage (82) configurée de manière à afficher une interface utilisateur graphique qui est configurée de manière à être commandée par un utilisateur ;
une section de commande d'édition (66) configurée de manière à commander un dispositif de traitement d'image (28, 30, 32, 40) connecté au réseau en vue de télécharger le document en utilisant une valeur de discernement de terminaux ;
une section de discernement de terminaux (72) agencée de manière à gérer une liste des valeurs de discernement de terminaux des équipements terminaux clients (14-14e) qui constituent un groupe de travail dans le réseau ; et
une section de traitement d'informations (74) configurée de manière à commander l'accès au document en utilisant la liste des valeurs de discernement de terminaux entre la section de commande d'édition (66) et la section de discernement de terminaux (72).

2. Équipement terminal client selon la revendication 1, comprenant en outre :
une section de traitement de transmission de fichiers (40, 44) agencée de manière à mettre en oeuvre un téléchargement et un chargement d'un document avec le dispositif de traitement d'image (28, 30, 32, 34) par le biais d'une commande d'accès par la section de traitement d'informations ; et
une section de traitement de stockage (42) configurée de manière à mettre en oeuvre un traitement en vue de stocker le document téléchargé.

3. Équipement terminal client selon la revendication 2,
dans lequel la section de traitement d'informations (74) est agencée de manière à notifier un téléchargement réussi au dispositif de traitement d'image (28, 30, 32, 34), et amène l'équipement terminal client (14-14e), pour lequel le téléchargement a réussi; à utiliser un droit éditorial du document téléchargé sur le dispositif de traitement d'image.

4. Équipement terminal client selon la revendication 2 ou 3,
dans lequel la section de traitement d'informations (74) est configurée de manière à sélectionner la valeur de discernement de terminaux commandée à partir de l'interface utilisateur graphique (82), et à charger la valeur de discernement de terminaux sélectionnée dans le dispositif de traitement d'image (28, 30, 32, 34) en tant que valeur de discernement de terminaux d'un équipement terminal client d'édition successif avec un document édité.

5. Équipement terminal client selon au moins l'une des revendications 2 à 4,
dans lequel la section de traitement de transmission de fichiers (40, 44) est agencée de manière à télécharger la valeur de discernement de terminaux enregistrée dans le dispositif de traitement d'image (28, 30, 32, 34), et lorsque la valeur de discernement de terminaux n'est pas régulière, une valeur de discernement de terminaux régulière acquise par l'interface utilisateur graphique (82) est agencée de manière à être chargée vers le dispositif de traitement d'image.

6. Équipement terminal client selon au moins l'une des revendications 2 à 5,
dans lequel, quand la valeur de discernement de terminaux enregistrée dans le dispositif de traitement d'image est téléchargeable, et un traitement de certification est configuré de manière à être mis en oeuvre par le biais de l'interface utilisateur graphique.

7. Système d'édition de document (10) configuré de manière à mettre en oeuvre un traitement d'édition d'un document par l'intermédiaire d'un réseau (18), comprenant :
une pluralité d'équipements terminaux clients selon la revendication 1, dans lequel
le dispositif de traitement d'image (28, 30, 32, 34) est configuré de manière à répondre à une demande de document émanant de l'équipement terminal client, à rechercher le document en utilisant la valeur de discernement de terminaux incluse dans la demande de document en qualité de clé de recherche, et à télécharger le document recherché sur l'équipement terminal client qui a émis la demande.

8. Système d'édition de document selon la revendication 7,
dans lequel l'équipement terminal client comprend :
une section de traitement de transmission de fichiers (40, 44) agencée de manière à mettre en oeuvre un téléchargement et un chargement d'un document avec le dispositif de traitement d'image (28, 30, 32, 34) par le biais d'une commande d'accès par la section de traitement d'informations ; et
une section de traitement de stockage (42), de manière à mettre en oeuvre un traitement en vue de stocker le document téléchargé.

9. Produit-programme informatique pouvant être mis en oeuvre dans un équipement terminal client (14-14e) configuré de manière à exécuter un traitement d'édition d'un document par l'intermédiaire d'un réseau (18), le traitement comprenant :
afficher une interface utilisateur graphique, laquelle est commandée par un utilisateur ;
commander à un dispositif de traitement d'image (28, 30, 32, 34) connecté au réseau d'accéder au document en utilisant une valeur de discernement de terminaux ;
gérer une liste des valeurs de discernement de terminaux des équipements terminaux clients, qui constituent un groupe de travail dans le réseau ;
commander l'accès au document en utilisant la liste des valeurs de discernement de terminaux entre une section de commande d'édition (66) et une section de discernement de terminaux (72) ;
télécharger le document avec le dispositif de traitement d'image dans la mesure où l'accès est commandé ; et
stocker le document téléchargé en faisant appel à la section de traitement de stockage (42).

10. Produit-programme informatique selon la revendication 9, dans lequel le traitement comporte en outre :
notifier un succès du téléchargement au dispositif de traitement d'image ; et
amener l'équipement terminal client, pour lequel le téléchargement à réussi, à utiliser un droit éditorial du document téléchargé sur le dispositif de traitement d'image.

11. Produit-programme informatique selon la revendication 9 ou 10, dans lequel le traitement comporte en outre :
sélectionner la valeur de discernement de terminaux commandée à partir de l'interface utilisateur graphique ; et
charger la valeur de discernement sélectionnée vers le dispositif de traitement d'image en qualité de valeur de discernement de terminaux d'un équipement terminal client d'édition successif avec un document édité.

12. Produit-programme informatique selon au moins l'une des revendications 9 à 11, dans lequel le traitement comporte en outre :
télécharger la valeur de discernement de terminaux enregistrée dans le dispositif de traitement d'image ;
charger une valeur de discernement de terminaux régulière acquise par l'intermédiaire de l'interface utilisateur graphique vers le dispositif de traitement d'image lorsque la valeur de discernement de terminaux de l'étape précédente n'est pas régulière ; et
mettre en oeuvre un traitement de certification par le biais de l'interface utilisateur graphique, lorsque la valeur de discernement de terminaux enregistrée dans le dispositif de traitement d'image est téléchargée.

13. Procédé destiné à mettre en oeuvre un traitement d'édition d'un document à travers un réseau en utilisant un équipement terminal client (14-14e), le procédé comprenant les étapes ci-dessous consistant à :
afficher une interface utilisateur graphique en utilisant une unité d'affichage (82), laquelle peut être commandée par un utilisateur :
commander un dispositif de traitement d'image (28, 30, 32, 34), en utilisant une section de commande d'édition (66), en vue de télécharger un document en provenance du réseau (18) en faisant appel à une valeur de discernement de terminaux ;
gérer une liste des valeurs de discernement de terminaux des équipements terminaux clients (14-14e), laquelle constitue un groupe de travail dans le réseau (18), en utilisant une section de discernement de terminaux ; et
commander l'accès au document en utilisant une section de traitement d'informations (74) qui utilise la liste des valeurs de discernement de terminaux entre la section de commande d'édition (66) et la section de discernement de terminaux (72).

14. Procédé selon la revendication 13, dans lequel
le téléchargement et le chargement d'un document au moyen du dispositif de traitement d'image (28, 30, 32, 34) par l'intermédiaire d'une commande d'accès par la section de traitement d'informations sont mis en oeuvre par une section de traitement de transmission de fichiers (40, 44) ;
mettre en oeuvre un traitement en vue de stocker le document téléchargé en utilisant une section de traitement de stockage (42).

15. Procédé selon la revendication 14, dans lequel
la section de traitement d'informations (74) est agencée de manière à notifier un succès du téléchargement au dispositif de traitement d'image (28, 30, 32, 34), et amène l'équipement terminal client (14 - 14e), pour lequel le téléchargement a réussi, à utiliser un droit éditorial du document téléchargé sur le dispositif de traitement d'image (28, 30, 32, 34).

16. Procédé selon la revendication 14 ou 15, dans lequel
la section de traitement d'image sélectionne la valeur de discernement de terminaux commandée à partir de l'interface utilisateur graphique, et charge la valeur de discernement de terminaux sélectionnée vers le dispositif de traitement d'image (28, 30, 32, 34) en qualité de valeur de discernement de terminaux d'un équipement terminal client d'édition successif (14-14e) avec un document édité.

17. Procédé selon l'une quelconque des revendications 14 à 16, dans lequel
la section de traitement de transmission de fichiers arrange le téléchargement de la valeur de discernement de terminaux enregistrée dans le dispositif de traitement d'image (28, 30, 32, 34), et lorsque la valeur de discernement de terminaux n'est pas régulière, des valeurs de discernement de terminaux sont acquises par le biais de l'interface utilisateur graphique et agencées de manière à être chargées vers le dispositif de traitement d'image (28, 30, 32, 34).

18. Procédé selon l'une quelconque des revendications 14 à 17, dans lequel,
la valeur de discernement de terminaux enregistrée dans le dispositif de traitement d'image est téléchargée, et un processus de certification est configuré de manière à être mis en oeuvre par l'interface utilisateur graphique.
